(19) Europäisches Patentamt

European Patent Office

Office européen des brevets

(11) **EP 1 020 084 B1**

## (12) EUROPÄISCHE PATENTSCHRIFT

(45) Veröffentlichungstag und Bekanntmachung des Hinweises auf die Patenterteilung:
**16.08.2001 Patentblatt 2001/33**

(21) Anmeldenummer: **98954126.3**

(22) Anmeldetag: **07.09.1998**

(51) Int Cl.$^7$: **H04N 11/18**

(86) Internationale Anmeldenummer:
**PCT/DE98/02627**

(87) Internationale Veröffentlichungsnummer:
**WO 99/17554 (08.04.1999 Gazette 1999/14)**

(54) **DEEMPHASEFILTER MIT INTEGRIERTER UNBUNTWERT-ERMITTLUNG**

DE-EMPHASIS FILTER WITH INTEGRATED ACHROMATIC VALUE DETECTION

FILTRE DE DESACCENTUATION AVEC CALCUL INTEGRE DE LA VALEUR ACHROMATIQUE

(84) Benannte Vertragsstaaten:
**DE ES FR GB IT**

(30) Priorität: **29.09.1997 DE 19742940**

(43) Veröffentlichungstag der Anmeldung:
**19.07.2000 Patentblatt 2000/29**

(73) Patentinhaber: **Micronas Munich GmbH**
**81541 München (DE)**

(72) Erfinder: **NIE, Xiaoning**
**D-85591 Vaterstetten (DE)**

(74) Vertreter: **Patentanwälte**
**Westphal, Mussgnug & Partner**
**Mozartstrasse 8**
**80336 München (DE)**

(56) Entgegenhaltungen:
EP-A- 0 335 371          DD-A- 281 073
DD-A- 294 152          US-A- 4 499 427

• PATENT ABSTRACTS OF JAPAN vol. 8, no. 256 (E-280), 22. November 1984 & JP 59 128890 A (MATSUSHITA), 25. Juli 1984

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft Deemphasefilter für SECAM-codierte Bildsignale. Solche Filter werden in SECAM-Decodern für Fernseh- oder Videogeräte eingesetzt.

Die SECAM-Norm sieht vor, daß die Farbtoninformation eines Bildes mit einer halb so großen räumlichen Auflösung übertragen wird wie die Helligkeitsinformation. Effektiv wird nur zu jeder zweiten Bildzeile Farbinformation übertragen. Da zu einer vollständigen Farbinformation neben der Helligkeit zwei verschiedene Arten von Farbinformation gehören, wird dem Signal der betreffenden Zeile nur eine der zwei Informationen aufmoduliert, die andere wird mit der darauffolgenden Zeile übertragen. Um die zwei verschiedenen Farbinformationen auf seiten des Empfängers unterscheiden zu können, werden zwei verschiedene Trägerfrequenzen $f_r$ und $f_b$ für die zwei Arten von Information verwendet. Die so modulierten Zeilen werden entsprechend als $D_r$- bzw. $D_b$-Zeilen bezeichnet.

Im Empfänger werden die einlaufenden Farbinformationssignale mit einer Frequenz $f_0 = 4{,}286$ MHz gemischt. Man erhält so Basisfrequenzbandsignale mit einem konstanten Offset, der jeweils der Differenz zwischen der jeweiligen Farbträgerfrequenz und der Mischfrequenz

$$f_r \text{ - } f_0 \text{ bzw. } f_b \text{ - } f_0$$

entspricht. Um Fehler in der Farbwiedergabe zu vermeiden, müssen diese Frequenzen sehr konstant sein. Der Sender überträgt deshalb in der Burstgate-Periode des Signals Identifikationsimpulse, die die Erkennung einer Zeile als $D_r$- bzw. $D_b$-Zeile und den Abgleich der Mischfrequenz $f_0$ gestatten sollen.

Zur Auswertung dieser Pulse und zur Bildung eines Mittelwerts über mehrere Zeilen (des Unbuntwerts) muß in jedem SECAM-Decoder eine spezielle Schaltung vorgesehen werden.

Aufgabe der Erfindung ist, diese Schaltung überflüssig zu machen.

Der erfindungsgemäßen Lösung, wie in Anspruch 1 definiert, liegt die Erkenntnis zugrunde, daß diese spezielle Schaltung immer nur während eines Bruchteils der Bildsignalperiode aktiv ist, nämlich während der Austastlücke, in der das Burstsignal übertragen wird. Ein weiterer obligatorischer Bestandteil jedes SECAM-Decoders ist das Deemphasefilter, das dazu dient, hochfrequente Anteile des Bildsignals, die vom Sender relativ zu den niederfrequenten Komponenten verstärkt (mit Preemphase) übertragen werden, wieder zu dämpfen, um so ein lineares Übertragungsverhalten mit konstantem Signal-Rauschabstand zu erzielen. Dieses Deemphasefilter ist nur während der Übertragung des Bildzeilensignals aktiv. Das Deemphasefilter nach Anspruch 1 kann während der Austastlücke auch zur Bestimmung des Unbuntwerts aktiviert werden.

Es umfaßt ein Rekursionsregister, das bei Betrieb als Deemphasefilter einen Hilfswert empfängt und speichert, bei dem es sich um einen bei der Bestimmung des Ausgabewerts des Filters anfallenden Zwischenwert oder den Ausgabewert selbst handeln kann und der anschließend in die Verarbeitung eines folgenden, in das Filter eingegebenen Zeilensignalwerts einfließt. Die Stärke dieses Einflusses bzw. der Rekursivität ist durch Komponenten der Rechenschaltung wie etwa Multiplizierer bestimmt. Zu Beginn der Burstgate-Periode wird mit Hilfe der Einrichtung zum Ausgeben eines für einen Schätzwert des Unbuntwerts repräsentativen Signals und des ersten Schalters der Inhalt des Rekursionsregisters durch den Schätzwert ersetzt. Während der Burstgate-Periode führt das Filter eine Verarbeitung wenigstens eines Werts des Burstsignals anhand des Schätzwerts durch, um einen verbesserten Schätzwert zu gewinnen. Dies kann insbesondere dadurch erfolgen, daß das Filter einen Mittelwert des Schätzwerts und des Burstsignalwerts erzeugt und ausgibt.

Zweckmäßigerweise umfaßt die Einrichtung zum Ausgeben eines Schätzwerts ein Register, in dem ein für einen im Laufe einer früheren Burstgate-Periode gemessenen Unbuntwert repräsentativer Wert gespeichert ist. Hierfür ist es besonders vorteilhaft, wenn das Filter einen zweiten Schalter umfaßt, der am Ende jeder Burstgate-Periode den Ausgangswert des Rekursionsregisters an einen Eingang der Einrichtung zum Ausgeben eines Schätzwerts zum Speichern darin anlegt.

Um zwei verschiedene Schätzwerte, einen für $D_r$- und den anderen für Db-Zeilen handhaben zu können, umfaßt die Einrichtung zum Ausgeben eines Schätzwerts zweckmäßigerweise zwei Register. Eine besonders einfache Verwaltung der Register ergibt sich, wenn diese nicht einem Zeilentyp zugeordnet, sondern in Reihe hintereinandergeschaltet sind, so daß jedes Register abwechselnd $D_b$- und $D_r$-Schätzwerte speichert.

Unterschiede in der Verarbeitung von Zeilensignal- und Burstsignaldaten im erfindungsgemäßen Filter lassen sich z.B. mit Hilfe wenigstens eines Multiplizierers mit veränderbarem Multiplikationsfaktor realisieren. Alternativ oder in Kombination damit läßt sich ein unterschiedliches Verhalten des Filters bei unveränderter Übertragungsfunktion dadurch simulieren, daß das Filter während des Bildzeilensignals und während des Burstsignals mit verschiedenen Taktraten betrieben wird.

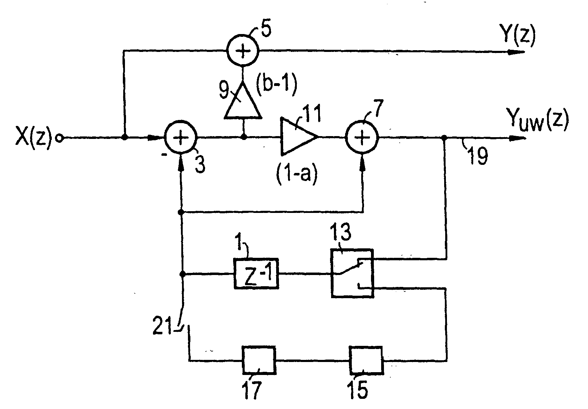

Weitere Merkmale und Vorteile der Erfindung ergeben sich aus der nachfolgenden Beschreibung eines Ausführungsbeispiels mit Bezug auf die beigefügte Figur, die ein schematisiertes Blockschaltbild des erfindungsgemäßen Deemphasefilters zeigt.

Die Übertragungsfunktion eines Deemphasefilters läßt sich in der allgemeinen Form

$$H(z) = \frac{b + cz^{-1}}{1 - az^{-1}} \tag{1}$$

schreiben, wobei $|a|<1$ gilt. Fordert man zusätzlich, daß die DC-Verstärkung 1 ist, so muß

$$H(1) = \frac{b + c}{1 - a} \tag{2}$$

gelten. Löst man (2) nach c auf und setzt das Ergebnis c=1-a-b in (1) ein, so erhält man

$$H(z) = \frac{b + (1 - a - b)z^{-1}}{1 - az^{-1}} = 1 + \frac{(b - 1)(1 - z^{-1})}{1 - az^{-1}} \tag{3}$$

Diese Übertragungsfunktion wird durch das Rekursionsfilter 1 und die Rechenschaltung mit Addierern 3, 5, 7 und Multiplizierern 9, 11 realisiert. Erste Eingänge der Addierer 3, 5 sind mit dem Eingang des Filters direkt verbunden. An den Ausgang des Addierers 3 sind Multiplizierer 9, 11 mit Multiplikationsfaktoren (b-1) bzw. (1-a) angeschlossen. Der Ausgang des Multiplizierers 11 ist über den Addierer 7 mit dem Eingang des Rekursionsregisters 1 verbunden, dessen Ausgang an die jeweils zweiten Eingänge der Addierer 3 und 7 angeschlossen ist und den während der jeweils vorhergehenden Taktperiode des Filters vom Addierer 7 ausgegebenen Hilfsdatenwert an diese ausgibt. Der zweite Eingang des Addierers 5 ist an den Multiplizierer 9 angeschlossen, sein Ausgang bildet den Ausgang für die deemphasegefilterten Bildzeilenwerte.

Ein erster Schalter 13 ist zwischen dem Addierer 7 und dem Eingang des Rekursionsregisters 1 angeordnet und verbindet in einer ersten Stellung beide miteinander, solange das Bildzeilensignal anhält.

Zwischen dem Ende eines Bildzeilensignals und dem Beginn eines Burstsignals wird der Schalter von einer (nicht dargestellten) Steuerschaltung einmal in eine zweite Stellung gebracht, in der er das Rekursionsregister mit einem ersten Register 15 verbindet, in dem ein Schätzwert des Unbuntwerts für die nächstfolgende Zeile abgelegt ist, und dieser Unbuntwert wird in das Rekursionsregister 1 eingetragen. Falls erforderlich, ändert die Steuerschaltung auch den Multiplikationsfaktor (1-a) des Multiplizierers 11.

Der im Rekursionsregister gespeicherte, vom letzten Bilddatenwert der vorhergehenden Bildzeile abgeleitete Hilfswert wird dabei überschrieben und geht verloren. Dies ist für die Deemphasefilterung jedoch unschädlich. Da aufgrund des großen Abstands kaum eine Korrelation zwischen den Bildinhalten an den letzten Punkten einer Bildzeile und den ersten der darauffolgenden besteht, ist dieser Wert für die Deemphasefilterung des Anfangs der nachfolgenden Bildzeile ohnehin wertlos.

Während der Burstgate-Periode führt die Schaltung wenigstens einen Arbeitstakt aus. Der Addierer 3 bildet die Differenz zwischen dem eingegebenen Burstsignalwert y und dem Inhalt des Rekursionsregisters 1, $Y_{uw}(-1)$. Nach Multiplikation mit dem Faktor (1-a) im Multiplizierer 11 wird im Addierer 7 der Registerinhalt $Y_{uw}(-1)$ wieder hinzuaddiert. Der so erhaltene Ausgabewert $Y_{uw}(0) = (1-a)y + aY_{uw}(-1)$ wird über den inzwischen in seine erste Stellung zurückgekehrten Schalter 13 in das Rekursionsregister 1 als aktueller Schätzwert des Unbuntwerts eingetragen. In weiteren Arbeitstakten wiederholt sich der Vorgang. Für Werte von a nahe 1 wird so der Unbuntwert für die auf die Burstgate-Periode folgenden Bilddaten als ein gleitender Mittelwert erhalten, in den zeitlich länger zurückliegende Bildzeilen mit exponentiell abnehmender Gewichtung eingehen. Die Zahl der Bildzeilen, über die sich die Mittelwertbildung effektiv erstreckt, kann durch passende Auswahl des Werts von a, durch passende Festlegung der Zahl von in jeder Burstgate-Periode zu verarbeitenden Werten des Burstsignals oder beides festgelegt werden. Der erhaltene Mittelwert wird über einen an den Ausgang des Addierers 7 angeschlossenen zweiten Ausgang 19 des Filters ausgegeben.

Am Ende der Burstgate-Periode schließt die Steuerschaltung einen zweiten Schalter 21, der den Ausgang des Rekursionsregisters 1 mit einem zweiten Register 17 zu verbindet, um den aktuellen Schätzwert $Y_{uw}(0)$ darin zu speichern. Spätestens zu diesem Zeitpunkt ist der der vorhergehenden Bildzeile entsprechende, abweichende Unbuntwert vom zweiten Register 17 in das mit ihm in Reihe verbundene erste Register 15 übertragen. Eine ggf. erfolgte Änderung des Multiplikationsfaktors (1-a) des Multiplizierers 11 wird in dieser Phase rückgängig gemacht. Anschließend wird der zweite Schalter 21 wieder geöffnet, so daß der Inhalt des zweiten Registers 17 während der sich an die Burstgate-Periode anschließenden Deemphasefilterung des Bildzeilensignals unverändert bleibt.

Im Laufe der nächsten Burstgate-Periode wird der so erhaltene Wert vom zweiten ins erste Register übertragen, um zu Beginn der übernächsten Periode wieder ins Rekursionsregister eingetragen zu werden. Beide Unbuntwerte sind so jeweils abwechselnd in einem der beiden Register 15, 17 gespeichert und werden abwechselnd in ein und derselben Eilterschaltung verarbeitet, ohne miteinander zu interferieren.

Die oben beschriebene Deemphasefilterschaltung ermöglicht eine variable Deemphasefilterung, bei der keine Division zu ihrer Normierung erforderlich ist. Da der bislang erforderliche, separat ausgeführte Unbuntwert-Akkumulator entfällt, läßt sich im Vergleich zur herkömmlichen integrierten Realisierung ca. ein Drittel an Substratfläche einsparen.

Die vorliegende Erfindung umfaßt im Rahmen der Ansprüche eine Vielzahl von Abwandlungen. So ist es z. B. möglich, die Register 15, 17 nicht in Reihe, sondern parallel zu schalten, wobei die Steuerschaltung die Register so steuern kann, daß, jeweils von einer Bildzeile zur nächsten abwechselnd, eines der Register zu Beginn der Burstgate-Periode den gespeicherten Wert in das Rekursionsregister überträgt und am Ende dieser Periode mit dem im Rekursionsregister 1 enthaltenen aktualisierten Wert überschrieben wird. So ist jedes Register einem Zeilentyp fest zugeordnet.

Zu diesem Zweck kann der erste Schalter drei Stellungen aufweisen: die oben beschriebene erste Stellung sowie eine zweite und eine dritte Stellung, in der er den Eingang des Rekursionsregisters 1 mit dem Ausgang des ersten 15 bzw. des zweiten Registers 17 verbindet.

Bezugszeichenliste

| | |
|---|---|
| 1 | Rekursionsregister |
| 3, 5, 7 | Addierer |
| 9, 11 | Multiplizierer |
| 13, 21 | Schalter |
| 15, 17 | Register |
| 19 | Ausgang |

**Patentansprüche**

1. Digitales Deemphasefilter für einen SECAM-Decoder zum Umsetzen einer Folge von Eingangsbilddaten in gefilterte Bilddaten, mit wenigstens einem Rekursionsregister (1) zum Speichern eines anhand eines eingegebenen Bilddatenwerts erhaltenen Hilfswerts und einer Rechenschaltung (3, 5, 7, 9, 11), welche anhand des Hilfswerts und eines neu eingegebenen Bilddatenwerts einen neuen Hilfswert, der den Inhalt des Rekursionsregisters (1) ersetzt, und einen gefilterten Bilddatenwert erzeugt, **dadurch gekennzeichnet, daß** das Filter eine Einrichtung (15, 17,21) zum Speichern und Ausgeben eines für einen Schätzwert des Unbuntwerts des SECAM-Signals repräsentativen Werts, und einen ersten Schalter (13) zum Anlegen und Eintragen des ausgegebenen Schätzwerts in das Rekursionsregister (1) zu Beginn jeder Burstgate-Periode des SECAM-Signals umfaßt, und daß die Rechenschaltung (3, 5, 7, 9, 11) anhand des eingetragenen Schätzwerts und wenigstens eines Werts des Burstsignals einen aktualisierten Schätzwert ausgibt.

2. Deemphasefilter nach Anspruch 1, dadurch gekennzeichnet, daß das Filter einen gewichteten Mittelwert des Schätzwerts und des Burstsignalwerts erzeugt und ausgibt.

3. Deemphasefilter nach Anspruch 1 oder 2, **dadurch gekennzeichnet**, daß die Einrichtung (13, 15) zum Ausgeben eines Schätzwerts ein Register (13; 15) umfaßt, in dem ein für einen im Laufe einer früheren Burstgate-Periode gemessenen Unbuntwert repräsentatives Signal gespeichert ist.

4. Deemphasefilter nach Anspruch 3, **gekennzeichnet durch** einen zweiten Schalter (21), der am Ende jeder Burstgate-Periode den Ausgabewert des Rekursionsregisters (1) an einen Eingang der Einrichtung (13, 15)zum Ausgeben eines Schätzwerts zum Speichern darin anlegt.

5. Deemphasefilter nach einem der Ansprüche 3 oder 4, dadurch gekennzeichnet, daß die Einrichtung (13, 15) zum Ausgeben eines Schätzwerts zwei Register (15, 17) umfaßt, in denen jeweils ein Schätzwert für eine $D_r$- bzw. $D_b$-Zeile gespeichert ist.

6. Deemphasefilter nach Anspruch 5, dadurch gekennzeichnet, daß die zwei Register (15, 17) in Reihe geschaltet sind.

**7.** Deemphasefilter nach einem der Ansprüche 1 bis 6,dadurch gekennzeichnet, daß es wenigstens einen Multiplizierer (11) enthält, dessen Multiplikationsfaktor während der Burstgate-Periode einen anderen Wert annimmt als während der Bildzeilenübertragung.

**8.** Deemphasefilter nach einem der Ansprüche 1 bis 6,dadurch gekennzeichnet, daß es während der Bildzeilenübertragung und während der Burstgate-Periode mit verschiedenen Taktraten arbeitet.

## Claims

**1.** Digital de-emphasis filter for a SECAM decoder for converting a sequence of input image data into filtered image data, having at least one recursion register (1) for storing an auxiliary value, obtained with the aid of an input image data value, and an arithmetic circuit (3, 5, 7, 9, 11) which, with the aid of the auxiliary value and a newly input image data value, generates a new auxiliary value, which replaces the contents of the recursion register (1), and a filtered image data value, characterized in that the filter comprises a device (15, 17, 21) for storing and outputting a value representative of an estimated value of the achromatic value of the SECAM signal, and a first switch (13) for applying and registering the output estimated value into the recursion register (1) at the beginning of each burst gate period of the SECAM signal, and in that the arithmetic circuit (3, 5, 7, 9, 11) uses the registered estimated value and at least one value of the burst signal to output an estimated updated value.

**2.** De-emphasis filter according to Claim 1, characterized in that the filter generates and outputs a weighted mean value of the estimated value and the burst signal value.

**3.** De-emphasis filter according to Claim 1 or 2, characterized in that the device (13, 15) for outputting an estimated value comprises a register (13; 15) in which a signal representative of an achromatic value measured in the course of an earlier burst gate period is stored.

**4.** De-emphasis filter according to Claim 3, characterized by a second switch (21) which, at the end of each burst gate period, applies the output value of the recursion register (1) to an input of the device (13, 15) for outputting an estimated value, for the purpose of storing it therein.

**5.** De-emphasis filter according to one of Claims 3 or 4, characterized in that the device (13, 15) for outputting an estimated value comprises two registers (15, 17) in which in each case an estimated value for a $D_r$ line and $D_b$ line respectively, is stored.

**6.** De-emphasis filter according to Claim 5, characterized in that the two registers (15, 17) are connected in series.

**7.** De-emphasis filter according to one of Claims 1 to 6, characterized in that it includes at least one multiplier (11) whose multiplication factor assumes another value during the burst gate period than during picture line transmission.

**8.** De-emphasis filter according to one of Claims 1 to 6, characterized in that it operates with different clock-pulse rates during picture line transmission and during the burst gate period.

## Revendications

**1.** Filtre de désaccentuation numérique pour un décodeur SECAM pour transformer une suite de données d'image d'entrée en données d'image filtrées, comportant au moins un registre de récurrence (1) pour mémoriser une valeur auxiliaire obtenue à l'aide d'une valeur de données d'image entrée et un circuit de calcul (3, 5, 7, 9, 11) qui produit à l'aide de la valeur auxiliaire et d'une nouvelle valeur de données d'image entrée une nouvelle valeur auxiliaire remplaçant le contenu du registre de récurrence (1) et une valeur de données d'image entrée filtrée, caractérisé par le fait que le filtre comprend un dispositif (15, 17, 21) pour mémoriser et sortir une valeur représentative pour une valeur estimée de la valeur achromatique du signal SECAM et un premier commutateur (13) pour appliquer et enregistrer la valeur estimée sortie dans le registre de récurrence (1) au début de chaque période Burstgate du signal SECAM et que le circuit de calcul (3, 5, 7, 9, 11) sort une valeur estimée actualisée à l'aide de la valeur estimée enregistrée et d'au moins une valeur du signal de salve.

2. Filtre de désaccentuation selon la revendication 1, caractérisé par le fait que le filtre produit et sort une valeur moyenne pondérée de la valeur estimée et de la valeur de signal de salve.

3. Filtre de désaccentuation selon la revendication 1 ou 2, caractérisé par le fait que le dispositif (13, 15) destiné à la sortie d'une valeur estimée comprend un registre (13 ; 15) dans lequel est mémorisé un signal représentatif pour une valeur achromatique mesurée au cours d'une période Burstgate antérieure.

4. Filtre de désaccentuation selon la revendication 3, caractérisé par un deuxième commutateur (21) qui applique à la fin de chaque période Burstgate la valeur de sortie du registre de récurrence (1) à une entrée du dispositif (13, 15) destiné à la sortie d'une valeur estimée afin qu'elle y soit mémorisée.

5. Filtre de désaccentuation selon l'une des revendications 3 ou 4, caractérisé par le fait que le dispositif (13, 15) destiné à la sortie d'une valeur estimée comprend deux registres (15, 17) dans lesquels il est mémorisé à chaque fois une valeur estimée pour une ligne $D_r$ et pour une ligne $D_b$.

6. Filtre de désaccentuation selon la revendication 5, caractérisé par le fait que les deux registres (15, 17) sont branchés en série.

7. Filtre de désaccentuation selon l'une des revendications 1 à 6, caractérisé par le fait qu'il contient au moins un multiplicateur (11) dont le facteur de multiplication prend pendant la période Burstgate une autre valeur que pendant la transmission de ligne d'image.

8. Filtre de désaccentuation selon l'une des revendications 1 à 6, caractérisé par le fait qu'il travaille avec des débits d'horloge différents pendant la transmission de ligne d'image et pendant la période Burstgate.